# EUROPEAN PATENT SPECIFICATION

(11) **EP 3 943 233 B1**
(45) Date of publication and mention of the grant of the patent: **25.10.2023**
(21) Application number: 21187539.8
(22) Date of filing: 23.07.2021
(51) Int. Cl.: B23Q 1/03, B23Q 17/00, B23Q 17/24

(54) **METHOD FOR THE POSITIONING OF LOCKING DEVICES FOR COMPONENTS MADE OF WOOD, PLASTIC OR THE LIKE, IN PARTICULAR PANELS**
VERFAHREN ZUM POSITIONIEREN VON VERRIEGELUNGSVORRICHTUNGEN FÜR BAUTEILE AUS HOLZ, KUNSTSTOFF ODER DERGLEICHEN, INSBESONDERE PLATTEN
PROCÉDÉ POUR LE POSITIONNEMENT DE DISPOSITIFS DE VERROUILLAGE POUR DES COMPOSANTS EN BOIS, EN PLASTIQUE OU SIMILAIRE, EN PARTICULIER DES PANNEAUX

(30) Priority: 24.07.2020 IT 202000017971
(43) Date of publication of application: 26.01.2022
(73) Proprietor: BIESSE S.p.A., 61122 Pesaro (PU) (IT)
(72) Inventor: ASCANI, Andrea, 61122 Pesaro (PU) (IT); MORRI, Mattia, 61122 Pesaro (PU) (IT)
(74) Representative: Studio Torta S.p.A.

(56) References cited:
- EP-B1- 2 586 564
- DE-A1- 10 054 271
- DE-A1-102015 202 052
- IT-A1- BO20 090 561

## Description

### CROSS-REFERENCE TO RELATED APPLICATIONS

This patent application claims priority from Italian patent application no. 102020000017971 filed on 24/07/2020.

### TECHNICAL FIELD

This invention relates to a method for the positioning of locking devices for components made of wood, plastic, or the like, in particular panels.

### BACKGROUND ART

In the wood component processing industry, it is known to provide a machine of the type comprising a base defining a processing station that has a substantially horizontal support surface; a plurality of interchangeable locking devices that are different to each other and designed to be arranged on the support surface for holding at least one component in the processing station; and an operating head for processing the component itself.

Generally, each locking device comprises first locking means for locking the locking device in releasable manner to the support surface and second locking means to lock the component in releasable manner to the locking device.

In the wood component processing industry, it is also known to provide a machine of the type comprising an elongated base, which extends in a first, substantially horizontal direction and has two guide spars parallel to the first direction itself; a plurality of cross members, which are mounted between the guide spars parallel to a second direction that is substantially horizontal and transverse to the first direction, and are movable along the base in the first direction; and an overhead crane, which extends above the base in the second direction, is movable along the base in the first direction, and is provided with at least one operating head movable along the overhead crane in the second direction.

Each cross member supports at least one slide coupled in a sliding manner to the cross member to make straight movements in the second direction.

The slide is coupled to a plurality of interchangeable locking devices, which are different to each other, and are designed to be mounted on the slide itself to hold at least one component.

Generally, each locking device comprises first locking means for locking the locking device in a releasable manner to the slide and second locking means to lock the component in a releasable manner to the locking device.

Generally, the different types of locking devices are mounted by dedicated staff on the support surface of the processing station or on the slides of the cross members, depending on the type of component and/or on the type of processing to be carried out on the component.

Since, during the setting up of the machine, the dedicated staff must select and install the type of locking device required on a case-by-case basis, the known machines for processing components made of wood or the like, of the type described above, have some drawbacks, mainly deriving from the fact that the setup may entail erroneous choices, on the part of the dedicated staff, in selecting and positioning the type of locking device.

### DISCLOSURE OF INVENTION

The object of this invention is to provide a method for the positioning of locking devices for components made of wood, plastic, or the like, in particular panels, which is free of the drawbacks described above and that is simple and economical to implement.

According to this invention, a method for the positioning of locking devices for components made of wood, plastic, or the like, in particular panels, is provided, as claimed in claims 1 to 9.

This invention relates, further, to a machine for processing components made of wood, plastic, or the like, in particular panels.

According to this invention, a machine for processing components made of wood, plastic, or the like, in particular panels, is provided, as claimed in claim 10.

### BRIEF DESCRIPTION OF THE DRAWINGS

This invention will now be described with reference to the attached drawings that illustrate a non-limiting embodiment thereof, in which:
Figure 1 is a schematic perspective view, with parts removed for clarity, of a preferred embodiment of the machine of this invention;
Figure 2 is a schematic plan view of a detail of the machine in Figure 1; and
Figure 3 is a schematic perspective view, with parts removed for clarity, of a variant of the machine of the machine in Figures 1 and 2.

### BEST MODE FOR CARRYING OUT THE INVENTION

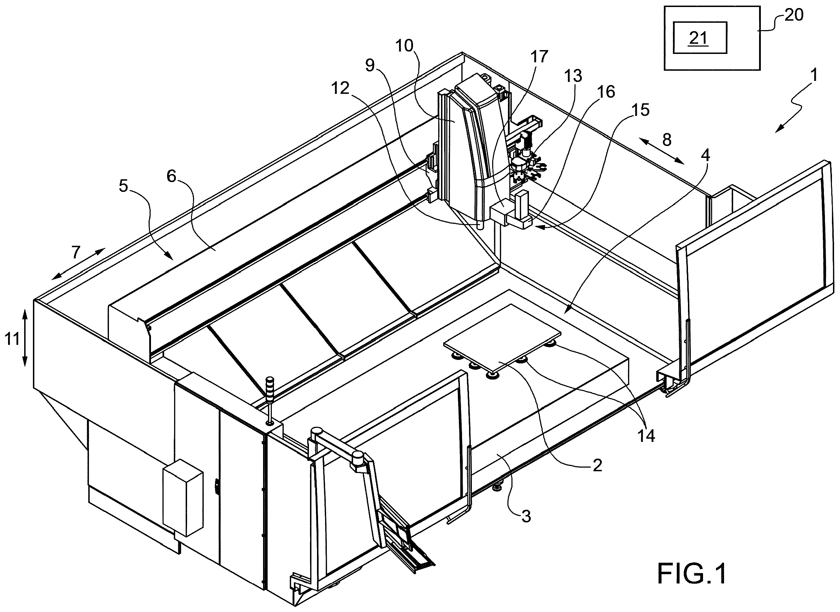

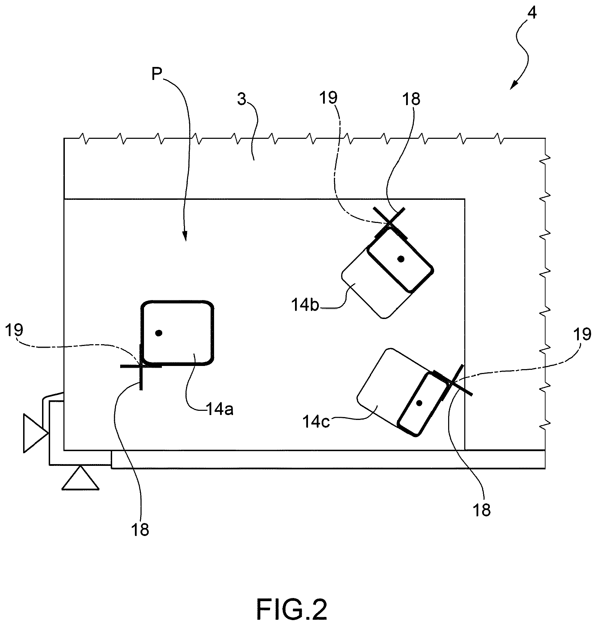

With reference to Figures 1 and 2, the reference number 1 indicates, as a whole, a machine for processing components defined, in the present case, by panels 2 that are substantially flat, for example made of wood, or glass, or marble.

Obviously, according to some variants that are not illustrated, the components may have shapes other than the flat shape of the panels 2 and may be made of materials other than wood or glass or marble.

The machine 1 comprises a base 3 that is substantially rectangular and is bound by a support surface P that is substantially horizontal, defining a processing station 4 for the panels 2.

The base 3 supports a processing unit 5 comprising a horizontal cross member 6, which extends in a horizontal direction 7, and is joined, so that it slides, to the base 3 to make straight movements, in relation to the base 3, in a horizontal direction 8 that is transverse to the direction 7.

The unit 5 is further provided with a horizontal slide 9, which is coupled, so that it slides, to the cross member 6 in order to make straight movements along the cross member 6 in the direction 7, and supports an operating head 10 that is coupled in a known way to the slide 9 to make straight movements, in relation to the slide 9, in a vertical direction 11 that is orthogonal to the directions 7 and 8.

The head 10 is provided with at least one known electrospindle (not illustrated) designed to receive and hold a processing tool 12, and cooperates with a tool storage 13 mounted on the slide 9 to enable the tool 12 mounted on a case-by-case basis on the electrospindle (not illustrated) to be replaced.

Each panel 2 is locked to the surface P via the interposition of a plurality of interchangeable locking devices 14 of different types designed to be mounted in a releasable manner onto the base 3.

Each device 14 comprises first, known locking means (not illustrated) to lock the device 14 in a releasable manner to the surface P, and second, known locking means (not illustrated) to lock the panel 2 in a releasable manner to the device 14.

The different types of locking devices 14 comprise, for example:
a support block 14a that is delimited by an upper support face that is substantially flat and perpendicular to the direction 11;
a support block 14b that is delimited by an upper support face that is step-shaped; or
a support block 14c that is delimited by an upper support face that is step-shaped with different dimensions to the upper support face of the other block 14b.

The locking devices 14 are selectively positioned on the surface P depending on the type of panels 2 to be processed and/or the type of processing to be carried out on the panels themselves 2 using a positioning device 15.

The device 15 comprises, in this case, a laser projector 16 that is mounted on the head 10 via the interposition of a support bar 17.

The projector 16 comprises a plurality of light sources (not illustrated) configured to generate and project respective position indicators 18 of different colours onto the surface P.

The position indicators 18 projected on the surface P have a cross shape corresponding to part of a lateral outline of each device 14.

The light sources (not illustrated) of the projector 16 are mounted in order to orient the position indicators 18 around respective rotation axes 19 that are substantially parallel to each other and to the direction 11.

The device 15 further comprises an electronic control unit 20 provided with a memory 21, inside of which:
to associate each type of device 14, i.e. each block 14a, 14b, 14c, with a corresponding type of panel 2 and/or with a corresponding type of processing to be carried out on the panel 2; and
to associate the different types of devices 14 with respective position indicators 18 with different colours.

The unit 20 is further configured so as to:
select the type of device 14 depending on the type of panel 2 and/or on the type of processing to be carried out on the panel 2; and
control the operation of the projector 16 in order to project the position indicator 18 corresponding to the type of device 14 selected onto the surface P.

According to a variant not illustrated, the projector 16 is eliminated and replaced with a plurality of projectors, each of which is provided with a light source configured to generate and project a position indicator 18 of a given colour on the surface P.

The machine 1 has, therefore, some advantages mainly deriving from the fact that the positioning device 15 allows to indicate to the dedicated staff the type of locking device 14 to be mounted on a case-by-case basis on the surface P, the position of the devices 14 in the directions 7 and 8, and the angular position of the devices 14 around the axes 19.

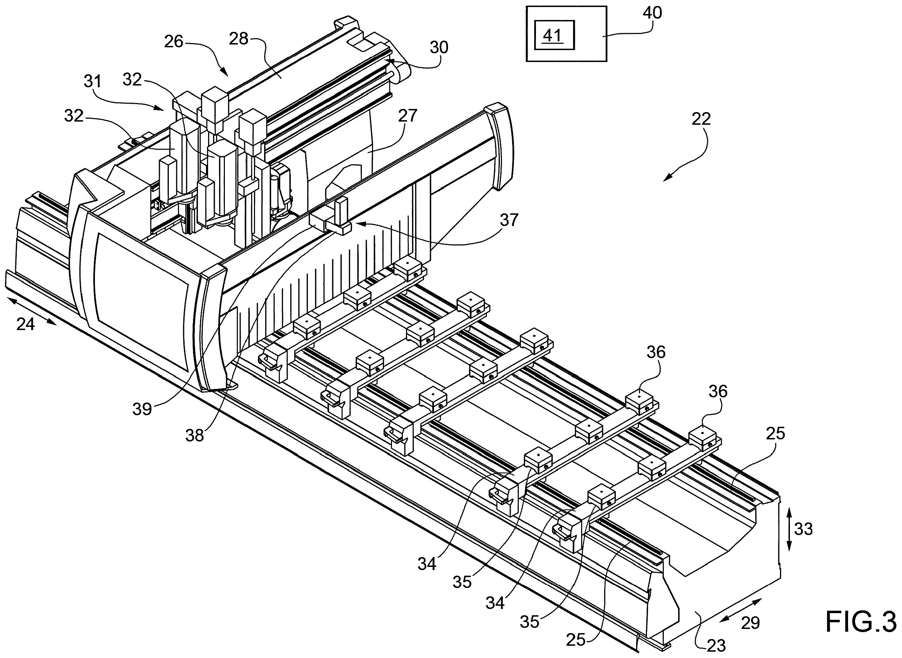

The variant illustrated in Figure 3 relates to a machine 22 comprising an elongated base 23, which extends in a horizontal direction 24, is substantially U-shaped, and has two, lateral guide spars 25 that are parallel to the direction 24 itself.

The base 23 supports an overhead crane 26 comprising a vertical pillar 27, which is coupled in a known way to the base 23 in order to make, along the base 23 itself and under the thrust of a known drive device (not illustrated), straight movements in the direction 24, and bears a cross member 28 connected to free end thereof, which extends above the base 23 in a horizontal direction 29 transverse to the direction 24, and is delimited laterally in the direction 24 itself by two lateral faces 30 opposite each other.

The overhead crane 26 supports a known operating head 31, which is mounted on one of the faces 30, is coupled in a known way to the cross member 28 to make, along the cross member 28 itself, straight movements in the direction 29, and is provided, in this case, with two electrospindles 32 placed side by side.

Each electrospindle 32 is mounted parallel to a vertical direction 33 orthogonal to the directions 24 and 29, is designed to receive and hold a processing tool or cluster (not illustrated), and is mounted in a known way to the head 31 to make, in relation to the head 31, straight movements in the direction 33 itself.

The machine 22 is further provided with a plurality of cross members 34, which will be indicated below with the term "work surfaces", extend between the spars 25 in the direction 29, and are coupled in a sliding manner to the spars 25 in order to be moved, manually or by means of corresponding drive devices that are known and not illustrated, along the spars 25 in the direction 24.

Each work surface 34 supports a plurality of slides 35, which are coupled in a sliding manner to the work surface 34 to make straight movements in the direction 29, and are distributed along the work surface 34 itself depending on the type of components (not illustrated) to be processed and/or of the type of processing to be carried out on the components (not illustrated).

Each slide 35 is coupled to a plurality of interchangeable locking devices 36, which are different to each other, and are designed to be mounted, so that they can be removed, to the slide 35 itself.

Each device 36 comprises first, known locking means (not illustrated) to lock the device 36 in a releasable manner to the slide 35, and second, known locking means (not illustrated) to lock the component (not illustrated) in a releasable manner to the device 36 itself.

The different types of locking devices 36 comprise, for example, support blocks that are identical to the above-mentioned blocks 14a, 14b, 14c.

The locking devices 36 are selectively positioned on the corresponding slides 35 depending on the type of components (not illustrated) to be processed and/or the type of processing to be carried out on the components (not illustrated) using a positioning device 37.

The device 37 comprises, in this case, a laser projector 38 mounted on a fairing 39 of the overhead crane 26.

The projector 38 comprises a plurality of light sources (not illustrated) configured to generate and project on the slides 35 respective position indicators (not illustrated), which are of different colours and are identical to the position indicators 18.

The light sources (not illustrated) of the projector 38 are mounted in order to orient the position indicators (not illustrated) around respective rotation axes (not illustrated) that are substantially vertical and parallel to the direction 33.

The device 37 further comprises an electronic control unit 40 provided with a memory 41, inside of which:
to associate each type of locking device 36 with a relative type of component (not illustrated) and/or with a relative type of processing to be carried out on the component (not illustrated) itself; and
to associate the different types of devices 36 with respective position indicators (not illustrated) with different colours.

The unit 40 is further configured so as to:
select the type of device 36 depending on the type of component (not illustrated) and/or on the type of processing to be carried out on the component (not illustrated) itself; and
control the operation of the projector 38 in order to project on each slide 35 the position indicator (not illustrated) corresponding to the type of device 36 selected.

The machine 22 has, therefore, some advantages mainly deriving from the fact that the positioning device 37 makes it possible to indicate to the dedicated staff the type of locking device 36 to be mounted on a case-by-case basis on each slide 35, the position of the devices 36 in the directions 24 and 29, and the angular position of the devices 36 around the above-mentioned rotation axes (not illustrated).

## Claims

1. A method for the positioning of locking devices (14) for components (2) made of wood, plastic or the like, in particular panels, in a machine comprising a base (3) defining a substantially horizontal support surface (P), a plurality of locking devices (14) of different types, which are designed to be placed on the support surface (P) in order to hold at least one component (2), and an operating head (10) to process the component (2); the method being **characterized in that** it comprises the steps of:
associating each type of locking device (14) with a relative type of component (2) and/or with a relative type of processing to be carried out on the component (2);
associating the different types of locking devices (14) with respective position indicators (18) with different colours;
selecting the type of locking device (14) depending on the type of component (2) and/or on the type of processing to be carried out on the component (2); and
projecting the position indicator (18) corresponding to the selected type of locking device (14) onto the support surface (P).

2. A method for the positioning of locking devices (36) for components (2) made of wood, plastic or the like, in particular panels, in a machine comprising an elongated base (23) extending in a first direction (24), a plurality of cross members (34) mounted on the base (23) parallel to a second direction (29), which is transverse to the first direction (24), a plurality of locking devices (36) of different types, which are designed to be mounted on each cross member (34) in order to hold at least one component (2), and an operating head (31) to process the component (2); the method being **characterized in that** it comprises the steps of:
associating each type of locking device (36) with a relative type of component (2) and/or with a relative type of processing to be carried out on the component (2);
associating the different types of locking devices (36) with respective position indicators with different colours;
selecting the type of locking device (36) depending on the type of component (2) and/or on the type of processing to be carried out on the component (2); and
projecting the position indicator corresponding to the selected type of locking device (36) onto the cross member (34) .

3. A method according to claim 2, wherein each cross member (34) is provided with at least one support slide (35), which is movable along the cross member (34) in the second direction (29); the different types of locking devices (36) being configured to be mounted on the support slide (35) in an interchangeable manner.

4. A method according to claim 3, wherein the position indicators of different colours are projected onto the support slide (35).

5. A method according to claim 1 or 2, wherein the position indicators (18) of different colours are projected onto the support surface (P) or onto the cross members (34) by means of one single projection device (16; 38), in particular a laser projection device.

6. A method according to claim 1 or 2, wherein the position indicators (18) of different colours are projected onto the support surface (P) or onto the cross members (34) by means of respective projection devices, in particular laser projection device.

7. A method according to claim 5 or 6, wherein the machine further comprises a gantry (6; 26), which extends above the base (3; 23) and supports the operating head (10; 31); each projection device (16; 38) being mounted on the gantry (6; 26), in particular on the operating head (10; 31) .

8. A method according to claim 7 and further comprising the steps of:
moving the gantry (6; 26) in a first direction (8; 24), which is substantially horizontal; and
moving the projection device (16; 38) along the gantry (6; 26) in a second direction (7; 29), which is substantially horizontal and transverse to the first direction (8; 24).

9. A method according to any one of the preceding claims, wherein each position indicator (18) has a shape corresponding to at least part of the outline of the relative locking device (14; 36); the method comprising the steps of:
orienting each position indicator (18) around a substantially vertical rotation axis (19).

10. A machine to process components (2) made of wood, plastic or the like, in particular panels, comprising a base (3, 23) having a support surface (P) or a plurality of cross members (34);
a plurality of locking devices (14; 36) of different types, which are designed to be mounted on the base (3; 23) so as to hold at least one component (2); an operating head (10; 31) to process the component (2); position indicators (18) with different colours; and control means (20; 40), which are configured to implement following method steps:
associating each type of locking device (14, 36) with a relative type of component (2) and/or with a relative type of processing to be carried out on the component (2); 5
associating the different types of locking devices (14, 36) with respective position indicators (18) with different colours;
selecting the type of locking device (14, 36) depending on the type of component (2) and/or on the type of processing to be carried out on the component (2); and
projecting the position indicator (18) corresponding to the selected type of locking device (14, 36) onto the support surface (P) or the cross member (34) of the base (3, 23).

## Patentansprüche

1. Verfahren zum Positionieren von Verriegelungsvorrichtungen (14) für Bauteile (2) aus Holz, Kunststoff oder dergleichen, insbesondere Platten, in einer Maschine, die eine Basis (3), die eine im Wesentlichen horizontale Auflagefläche (P) definiert, eine Vielzahl von Verriegelungsvorrichtungen (14) unterschiedlicher Typen, die dazu bestimmt sind, auf der Auflagefläche (P) angeordnet zu werden, um mindestens ein Bauteil (2) zu halten, und einen Arbeitskopf (10) zum Bearbeiten des Bauteils (2) umfasst, wobei das Verfahren **dadurch gekennzeichnet ist, dass** es die folgenden Schritte umfasst:
Zuordnen jedes Typs von Verriegelungsvorrichtung (14) zu einem entsprechenden Typ von Bauteil (2) und/oder zu einer entsprechenden Art der an dem Bauteil (2) durchzuführenden Bearbeitung;
Zuordnen der verschiedenen Typen von Verriegelungsvorrichtungen (14) zu entsprechenden Positionsindikatoren (18) mit unterschiedlichen Farben;
Auswählen des Typs der Verriegelungsvorrichtung (14) in Abhängigkeit von dem Typ des Bauteils (2) und/oder von der Art der an dem Bauteil (2) durchzuführenden Bearbeitung; und
Projizieren des Positionsindikators (18) entsprechend dem ausgewählten Typ von Verriegelungsvorrichtung (14) auf die Auflagefläche (P).

2. Verfahren zur Positionierung von Verriegelungsvorrichtungen (36) für Bauteile (2) aus Holz, Kunststoff oder dergleichen, insbesondere Platten, in einer Maschine, die eine sich in einer ersten Richtung (24) erstreckende längliche Basis (23), eine Mehrzahl von Querträgern (34), die auf der Basis (23) parallel zu einer zweiten Richtung (29), die quer zu der ersten Richtung (24) verläuft, eine Vielzahl von Verriegelungsvorrichtungen (36) unterschiedlicher Typen, die dazu bestimmt sind, an jedem Querträger (34) angebracht zu werden, um mindestens ein Bauteil (2) zu halten, und einen Arbeitskopf (31) zum Bearbeiten des Bauteils umfasst, wobei das Verfahren **dadurch gekennzeichnet ist, dass** es die folgenden Schritte umfasst:
Zuordnen jedes Typs von Verriegelungsvorrichtung (36) zu einem entsprechenden Typ von Bauteil (2) und/oder zu einer entsprechenden Art der an dem Bauteil (2) durchzuführenden Bearbeitung;
Zuordnen der verschiedenen Typen von Verriegelungsvorrichtungen (36) zu entsprechenden Positionsindikatoren mit unterschiedlichen Farben;
Auswählen des Typs der Verriegelungsvorrichtung (36) in Abhängigkeit von dem entsprechenden Typ des Bauteils (2) und/oder von der Art der an dem Bauteil (2) durchzuführenden Bearbeitung; und
Projizieren des Positionsindikators entsprechend dem ausgewählten Typ von Verriegelungsvorrichtung (36) auf den Querträger (34).

3. Verfahren nach Anspruch 2, wobei jeder Querträger (34) mit mindestens einem Stützschlitten (35) versehen ist, der entlang des Querträgers in der zweiten Richtung (29) beweglich ist, wobei die verschiedenen Typen von Verriegelungsvorrichtungen (36) so konfiguriert sind, dass sie auf dem Stützschlitten (35) in austauschbarer Weise montiert werden können.

4. Verfahren nach Anspruch 3, wobei die verschiedenfarbigen Positionsindikatoren auf den Stützschlitten (35) projiziert werden.

5. Verfahren nach Anspruch 1 oder 2, wobei die verschiedenfarbigen Positionsindikatoren (18) mittels einer einzigen Projektionsvorrichtung (16; 38), insbesondere einer Laserprojektionsvorrichtung, auf die Auflagefläche (P) oder auf die Querträger (34) projiziert werden.

6. Verfahren nach Anspruch 1 oder 2, wobei die verschiedenfarbigen Positionsindikatoren (18) mittels jeweiligen Projektionsvorrichtungen, insbesondere Laserprojektionsvorrichtungen, auf die Auflagefläche (P) oder auf die Querträger (34) projiziert werden.

7. Verfahren nach Anspruch 5 oder 6, wobei die Maschine ferner eine Führungsschiene (6; 26) umfasst, die sich oberhalb der Basis (3; 23) erstreckt und den Arbeitskopf (10; 31) trägt; wobei jede Projektionsvorrichtung (16; 38) an der Führungsschiene (6; 26), insbesondere an dem Arbeitskopf (10; 31), angebracht ist.

8. Verfahren nach Anspruch 7 und ferner die folgenden Schritten umfassend:
Bewegen der Führungsschiene (6; 26) in einer ersten Richtung (8; 24), die im Wesentlichen horizontal ist; und
Bewegen der Projektionsvorrichtung (16; 38) entlang der Führungsschiene (6; 26) in einer zweiten Richtung (7; 29), die im Wesentlichen horizontal und quer zu der ersten Richtung (8; 24) verläuft.

9. Verfahren nach einem der vorhergehenden Ansprüche, wobei jeder Positionsindikator (18) eine Form aufweist, die zumindest einem Teil des Umrisses der jeweiligen Verriegelungsvorrichtung (14; 36) entspricht; wobei das Verfahren die folgenden Schritte umfasst:
Ausrichten jedes Positionsindikators um eine im Wesentlichen vertikale Drehachse (19)

10. Maschine zur Bearbeitung von Bauteilen (2) aus Holz, Kunststoff oder dergleichen, insbesondere von Platten, die eine Basis (3, 23), die eine Auflagefläche (P) oder eine Vielzahl von Querträger (34) aufweist; eine Vielzahl von Verriegelungsvorrichtungen (14; 36) unterschiedlichen Typs, die dazu bestimmt sind, auf der Basis (3; 23) montiert zu werden, um mindestens ein Bauteil (2) zu halten; einen Arbeitskopf (10; 31) zur Bearbeitung des Bauteils (2); Positionsindikatoren (18) mit unterschiedlichen Farben; und Steuermittel (20; 40) umfasst, die so konfiguriert sind, dass sie die folgenden Verfahrensschritte ausführen:
Zuordnen jedes Typs von Verriegelungsvorrichtung (14, 36) zu einem entsprechenden Typ von Bauteil (2) und/oder zu einer entsprechenden Art von Verarbeitung, die an dem Bauteil (2) auszuführen ist;
Zuordnen der verschiedenen Typen von Verriegelungsvorrichtungen (14, 36) zu entsprechenden Positionsindikatoren (18) mit unterschiedlichen Farben;
Auswählen des Typs der Verriegelungsvorrichtung (14, 36) in Abhängigkeit des Typs des Bauteils (2) und/oder der Art der an dem Bauteil (2) durchzuführenden Bearbeitung; und
Projizieren des Positionsindikators (18), der dem ausgewählten Typ der Verriegelungsvorrichtung (14, 36) entspricht, auf die Auflagefläche (P) oder den Querträger (34) der Basis (3, 23).

## Revendications

1. Procédé pour le positionnement de dispositifs de verrouillage (14) pour des composants (2) en bois, en plastique ou similaire, en particulier des panneaux, dans une machine comprenant une base (3) définissant une surface de support (P) sensiblement horizontale, une pluralité de dispositifs de verrouillage (14) de différents types, qui sont conçus pour être placés sur la surface de support (P) afin de maintenir au moins un composant (2), et une tête opérationnelle (10) pour traiter le composant (2) ; le procédé étant **caractérisé en ce qu'**il comprend les étapes suivantes :
associer chaque type de dispositif de verrouillage (14) avec un type relatif de composant (2) et/ou avec un type relatif de traitement à réaliser sur le composant (2) ;
associer les différents types de dispositifs de verrouillage (14) avec des indicateurs de position (18) respectifs avec différentes couleurs ;
sélectionner le type de dispositif de verrouillage (14) en fonction du type de composant (2) et/ou du type de traitement à réaliser sur le composant (2) ; et
projeter l'indicateur de position (18) du dispositif de verrouillage (14) sur la surface de support (P) .

2. Procédé pour le positionnement de dispositifs de verrouillage (36) pour des composants (2) en bois, en plastique ou similaire, en particulier des panneaux, dans une machine comprenant une base allongée (23) s'étendant dans une première direction (24), une pluralité de traverses (34) montées sur la base (23) parallèle à une seconde direction (29), qui est transversale à la première direction (24), une pluralité de dispositifs de verrouillage (36) de différents types, qui sont conçus pour être montés sur chaque traverse (34) afin de maintenir au moins un composant (2) et une tête opérationnelle (31) pour traiter le composant (2) ; le procédé étant **caractérisé en ce qu'**il comprend les étapes suivantes :
associer chaque type de dispositif de verrouillage (36) avec un type relatif de composant (2) et/ou avec un type relatif de traitement à réaliser sur le composant (2) ;
associer les différents types de dispositifs de verrouillage (36) avec des indicateurs de position respectifs avec des couleurs différentes ;
sélectionner le type de dispositif de verrouillage (36) en fonction du type de composant (2) et/ou du type de traitement à réaliser sur le composant (2) ; et
projeter l'indicateur de position correspondant au type sélectionné de dispositif de verrouillage (36) sur la traverse (34).

3. Procédé selon la revendication 2, dans lequel chaque traverse (34) est prévue avec au moins une glissière de support (35) qui est mobile le long de la traverse (34) dans la seconde direction (29) ; les différents types de dispositifs de verrouillage (36) étant configurés pour être montés sur la glissière de support (35) d'une manière interchangeable.

4. Procédé selon la revendication 3, dans lequel les indicateurs de position de différentes couleurs sont projetés sur la glissière de support (35).

5. Procédé selon la revendication 1 ou 2, dans lequel les indicateurs de position (18) de différentes couleurs sont projetés sur la surface de support (P) ou sur les traverses (34) au moyen d'un seul dispositif de projection (16 ; 38), en particulier un dispositif de projection laser.

6. Procédé selon la revendication 1 ou 2, dans lequel les indicateurs de position (18) de différentes couleurs sont projetés sur la surface de support (P) ou sur les traverses (34) au moyen des dispositifs de projection respectifs, en particulier un dispositif de projection laser.

7. Procédé selon la revendication 5 ou 6, dans lequel la machine comprend en outre un portique (6 ; 26) qui s'étend au-dessus de la base (3 ; 23) et supporte la tête opérationnelle (10 ; 31) ; chaque dispositif de projection (16 ; 38) étant monté sur le portique (6 ; 26), en particulier sur la tête opérationnelle (10 ; 31) .

8. Procédé selon la revendication 7 et comprenant en outre les étapes suivantes :
déplacer le portique (6 ; 26) dans une première direction (8 ; 24) qui est sensiblement horizontale ; et
déplacer le dispositif de projection (16 ; 38) le long du portique (6 ; 26) dans une seconde direction (7 ; 29) qui est sensiblement horizontale et transversale par rapport à la première direction (8 ; 24) .

9. Procédé selon l'une quelconque des revendications précédentes, dans lequel chaque indicateur de position (18) a une forme correspondant à au moins une partie du contour du dispositif de verrouillage (14 ; 36) relatif ; le procédé comprenant l'étape suivante :
orienter chaque indicateur de position (18) autour d'un axe de rotation (19) sensiblement vertical.

10. Machine pour traiter des composants (2) en bois, en plastique ou similaire, en particulier des panneaux, comprenant une base (3, 23) ayant une surface de support (P) ou une pluralité de traverses (34) ;
une pluralité de dispositifs de verrouillage (14 ; 36) de différents types, qui sont conçus pour être montés sur la base (3 ;23) afin de maintenir au moins un composant (2) ; une tête opérationnelle (10 ; 31) pour traiter le composant (2) ; des indicateurs de position (18) avec différentes couleurs ; et
des moyens de commande (20 ; 40) qui sont configurés pour mettre en œuvre les étapes de procédé suivantes :
associer chaque type de dispositif de verrouillage (14, 36) avec un type relatif de composant (2) et/ou avec un type relatif de traitement à réaliser sur le composant (2) ;
associer les différents types de dispositifs de verrouillage (14, 36) avec des indicateurs de position (18) respectifs avec différentes couleurs ;
sélectionner le type de dispositif de verrouillage (14, 36) en fonction du type de composant (2) et/ou du type de traitement à réaliser sur le composant (2) ; et
projeter l'indicateur de position (18) correspondant au type sélectionné de dispositif de verrouillage (14, 36) sur la surface de support (P) ou la traverse (34) de la base (3, 23).
